# EUROPEAN PATENT APPLICATION

(11) **EP 3 737 043 A1**
(43) Date of publication of application: **11.11.2020**
(21) Application number: 18898289.6
(22) Date of filing: 23.11.2018
(51) Int. Cl.: H04L 12/40

(54) **METHOD FOR REPAIRING FAULT OF VNFM, MONITOR, VIM, VNFM, AND STORAGE MEDIUM**

(30) Priority: 02.01.2018 CN 201810001641
(71) Applicant: ZTE Corporation, shenzhen Guangdong 518057 (CN)
(72) Inventor: PAN, Jiaqiang, Shenzhen, Guangdong 518057 (CN)
(74) Representative: Pennacchio, Salvatore Giovanni
(86) International application number: PCT/CN2018/117231
(87) International publication number: WO 2019/134461

(57) **Abstract**

The present invention discloses a Virtualized Network Function Manager (VNFM) failure repairing method, which includes that: failure detection information of each VNFM is acquired according to a set detection cycle; and when it is determined based on the failure detection information that any VNFM fails, a failure repairing instruction of repairing the any VNFM is sent to a preset Virtualized Infrastructure Manager (VIM). The present invention also discloses a monitor, a VIM, a VNFM and a storage medium. By implementing the solutions, a VNFM failure may be automatically repaired, the VNFM failure repairing speed and efficiency may be effectively improved, and the reliability of the VNFM and the running stability and maintenance stability of a Virtualized Network Function (VNF) are effectively improved.

## Description

### Cross-Reference to Related Applications

The present application is filed based upon and claims priority to Chinese Patent Application No. 201810001641.7, filed on January 02, 2018, the contents of which are hereby incorporated by reference in its entirety.

### Technical Field

The present invention relates to the technical field of communication, and particularly to a VNFM failure repairing method, a monitor, a VIM, a VNFM and a storage medium.

### Background

Along with the continuous maturation of cloud computing technologies, cloud platforms have been rapidly developed in multiple fields. Based on this, for improving the flexibility of a communication network and further reducing the operating cost, a Network Functions Virtualization (NFV) technology is proposed. Under the condition that the NFV technology is used, a physical network element device is replaced with a Virtualized Network function (VNF) to decouple a network function from specific hardware, the VNF is isolated from an underlying Network Functions Virtualization Infrastructure (NFVI), and a VNFM implements life cycle management over the VNF. However, when the VNFM fails, the failing VNFM is required to be manually repaired, the repair efficiency is low, the repair speed is low, and the running stability and maintenance stability of the VNF are seriously influenced.

### Summary

The present invention discloses a VNFM failure repairing method, a monitor, a VIM, a VNFM and a storage medium, to solve the problem of low efficiency of manually repairing a VNFM failure in a conventional art.

The technical solution adopted in the present invention is to provide a VNFM failure repairing method, which may include that: failure detection information of each VNFM is acquired according to a set detection cycle; and when it is determined based on the failure detection information that any VNFM fails, a failure repairing instruction of repairing the any VNFM is sent to a preset VIM.

In an exemplary embodiment, the operation that it is determined based on the failure detection information that the any VNFM fails may include that: when the failure detection information of the any VNFM is a failure state, it is determined that the any VNFM fails; or, when the failure detection information of the any VNFM is not acquired in a set number of continuous detection cycles, it is determined that the any VNFM fails.

In an exemplary embodiment, the VNFM may include a master control VNFM and a backup VNFM; and the operation that the failure detection information of each VNFM is acquired according to the set detection cycle may include that: a failure detection instruction is sent to the master control VNFM and the backup VNFM according to the set detection cycle respectively, and the failure detection information fed back by the master control VNFM and the backup VNFM based on the failure detection instruction respectively is received.

In an exemplary embodiment, the any VNFM may be the master control VNFM; and before the operation that the failure repairing instruction of repairing the any VNFM is sent to the preset VIM, the method may further include that: a switching detection instruction of detecting whether the backup VNFM is switched to a present master control VNFM or not is sent to the backup VNFM, and switching detection state information fed back by the backup VNFM based on the switching detection instruction is received.

In an exemplary embodiment, the failure repairing instruction of repairing the any VNFM may include a restarting instruction for a first virtual machine, the master control VNFM before switching being arranged in the first virtual machine; and the operation that the failure repairing instruction of repairing the any VNFM is sent to the preset VIM may include that: under the condition that the switching detection state information is that the backup VNFM has been switched to the present master control VNFM, the restarting instruction for the first virtual machine is sent to the VIM.

In an exemplary embodiment, the failure repairing instruction of repairing the any VNFM may further include a reconstruction instruction for the master control VNFM before switching; and the operation that the failure repairing instruction of repairing the any VNFM is sent to the preset VIM may further include that: when received first state information fed back by the VIM based on the restarting instruction for the first virtual machine is that a restarting operation over the first virtual machine is completed, the failure detection instruction is sent to the master control VNFM before switching, and under the condition that the received failure detection information fed back by the master control VNFM before switching based on the failure detection instruction is the failure state, the reconstruction instruction for the master control VNFM before switching is sent to the VIM.

In an exemplary embodiment, after the operation that the reconstruction instruction for the master control VNFM before switching is sent to the VIM, the method may further include that: when received second state information fed back by the VIM based on the reconstruction instruction for the master control VNFM before switching is that a reconstruction operation over the master control VNFM before switching is completed, the failure detection instruction is sent to the master control VNFM before switching; and the failure detection information fed back by the master control VNFM before switching based on the failure detection instruction is received.

In an exemplary embodiment, the any VNFM may be the backup VNFM, and the failure repairing instruction of repairing the any VNFM may include a restarting instruction for a second virtual machine, the backup VNFM being arranged in the second virtual machine; and the operation that the failure repairing instruction of repairing the any VNFM is sent to the preset VIM may include that: the restarting instruction for the second virtual machine is sent to the VIM.

In an exemplary embodiment, the failure repairing instruction of repairing the any VNFM may further include a reconstruction instruction for the backup VNFM; and the operation that the failure repairing instruction of repairing the any VNFM is sent to the preset VIM may further include that: when received third state information fed back by the VIM based on the restarting instruction for the second virtual machine is that a restarting operation over the second virtual machine is completed, the failure detection instruction is sent to the backup VNFM, and under the condition that the received failure detection information fed back by the backup VNFM based on the failure detection instruction is the failure state, the reconstruction instruction for the backup VNFM is sent to the VIM.

In an exemplary embodiment, after the operation that the reconstruction instruction for the backup VNFM is sent to the VIM, the method may further include that: when received fourth state information fed back by the VIM based on the reconstruction instruction for the backup VNFM is that a reconstruction operation over the backup VNFM is completed, the failure detection instruction is sent to the backup VNFM; and the failure detection information fed back by the backup VNFM based on the failure detection instruction is received.

The present invention also provides a monitor, which may include a processor and a memory, and the processor being configured to execute a VNFM failure repairing program stored in the memory to implement the steps of the VNFM failure repairing method.

The present invention also provides a VNFM failure repairing method, which may include that: when a failure repairing instruction of repairing any VNFM is received from a preset monitor, a failure repairing operation is executed on the any VNFM based on the failure repairing instruction.

In an exemplary embodiment, the any VNFM may be a master control VNFM, and the failure repairing instruction of repairing the any VNFM may include a restarting instruction for a first virtual machine, the master control VNFM being arranged in the first virtual machine; and the operation that the failure repairing operation is executed on the any VNFM based on the failure repairing instruction when the failure repairing instruction of repairing the any VNFM is received from the preset monitor may include that: when the restarting instruction for the first virtual machine is received from the monitor, a restarting operation is executed on the first virtual machine.

In an exemplary embodiment, after the operation that the restarting operation is executed on the first virtual machine, the method may further include that: first state information is fed back to the monitor, the first state information being that the restarting operation over the first virtual machine is completed.

In an exemplary embodiment, the failure repairing instruction of repairing the any VNFM may further include a reconstruction instruction for the master control VNFM; and the operation that the failure repairing operation is executed on the any VNFM based on the failure repairing instruction when the failure repairing instruction of repairing the any VNFM is received from the preset monitor may further include that: when the reconstruction instruction for the master control VNFM is received from the monitor, a reconstruction operation is executed on the master control VNFM.

In an exemplary embodiment, after the operation that the reconstruction operation is executed on the master control VNFM, the method may further include that: second state information is fed back to the monitor, the second state information being that the reconstruction operation over the master control VNFM is completed.

In an exemplary embodiment, the any VNFM may be a backup VNFM, and the failure repairing instruction of repairing the any VNFM may include a restarting instruction for a second virtual machine, the backup VNFM being arranged in the second virtual machine; and the operation that the failure repairing operation is executed on the any VNFM based on the failure repairing instruction when the failure repairing instruction of repairing the any VNFM is received from the preset monitor may include that: when the restarting instruction for the second virtual machine is received from the monitor, a restarting operation is executed on the second virtual machine.

In an exemplary embodiment, after the operation that the restarting operation is executed on the second virtual machine, the method may further include that: third state information is fed back to the monitor, the third state information being that the restarting operation over the second virtual machine is completed.

In an exemplary embodiment, the failure repairing instruction of repairing the any VNFM may further include a reconstruction instruction for the backup VNFM; and the operation that the failure repairing operation is executed on the any VNFM based on the failure repairing instruction when the failure repairing instruction of repairing the any VNFM is received from the preset monitor may further include that: when the reconstruction instruction for the backup VNFM is received from the monitor, a reconstruction operation is executed on the backup VNFM.

In an exemplary embodiment, after the operation that the reconstruction operation is executed on the backup VNFM, the method may further include that: fourth state information is fed back to the monitor, the fourth state information being that the reconstruction operation over the backup VNFM is completed.

The present invention also provides a VIM, which may include a processor and a memory, and the processor being configured to execute a VNFM failure repairing program stored in the memory to implement the steps of the VNFM failure repairing method.

The present invention also provides a VNFM failure repairing method, which may include that: failure detection information is sent to a preset monitor according to a set detection cycle.

The present invention also provides a VNFM, which may include a processor and a memory, and the processor being configured to execute a VNFM failure repairing program stored in the memory to implement the steps of the VNFM failure repairing method.

The present invention also provides a computer-readable storage medium, which may store one or more programs, the one or more programs being executed by one or more processors to implement the steps of VNFM failure repairing method.

With adoption of the technical solutions above, the present invention may achieve the following advantages.

In the VNFM failure repairing method, monitor, VIM, VNFM and storage medium provided by the present invention, a VNFM failure may be automatically repaired, the VNFM failure repairing speed and efficiency may be effectively improved, and the reliability of the VNFM and the running stability and maintenance stability of a VNF are effectively improved.

### Brief Description of the Drawings

Fig. 1 is a flowchart of a VNFM failure repairing method according to a first embodiment and second embodiment of the present invention;
Fig. 2 is a composition structure diagram of a monitor according to a sixth embodiment of the present invention;
Fig. 3 is a composition structure diagram of a VIM according to a seventh embodiment of the present invention;
Fig. 4 is a composition structure diagram of a VNFM according to an eighth embodiment of the present invention;
Fig. 5 is a flowchart of a VNFM failure repairing method according to a tenth embodiment of the present invention;
Fig. 6 is a flowchart of a VNFM failure repairing method according to an eleventh embodiment of the present invention; and
Fig. 7 is a flowchart of a VNFM failure repairing method according to a twelfth embodiment of the present invention.

### Detailed Description of the Embodiments

For further elaborating the technical means adopted for a predetermined purpose and the effects of the present invention, the present invention will be described below in combination with the drawings and preferred embodiments in detail.

In an NFV technology, an Element Management System (EMS) implements maintenance management over a VNF; a VNFM implements life cycle management over the VNF; a VIM manages an underlying virtualized infrastructure; specific network service is completed through one or more VNFs; and a Network Function Virtualization Orchestrator (NFVO) manages network plans and orchestrates virtual resources.

After NFV is implemented, the virtual resources are orchestrated, allocated and managed through a Management and Orchestration (MANO) system (including the NFVO, the VNFM and the VIM).

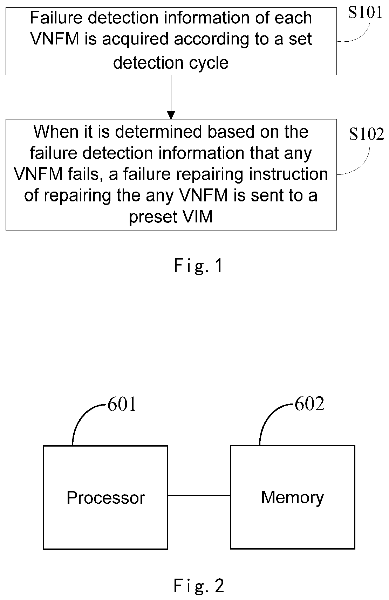

A first embodiment of the present invention provides a VNFM failure repairing method, which is applied to a monitor. As shown in Fig. 1, the method includes the following specific steps.

In S101, failure detection information of each VNFM is acquired according to a set detection cycle.

In the embodiment, the VNFM includes a master control VNFM and a backup VNFM.

In an exemplary embodiment, S101 includes that:
a failure detection instruction is sent to the master control VNFM and the backup VNFM according to the set detection cycle respectively; and
the failure detection information fed back by the master control VNFM and the backup VNFM based on the failure detection instruction respectively is received.

In the embodiment, the set detection cycle is not specifically limited, and the set detection cycle may be an optimal detection cycle set according to experiences of an engineer, may also be an optimal detection cycle acquired according to a limited number of tests and may also be an optimal detection cycle acquired according to a limited number of computer simulations.

In the embodiment, the failure detection information is a failure state or a normal state.

In the embodiment, the number of master control VNFMs and backup VNFMs are not specifically limited and may specifically be set according to a cloud environment.

In S102, when it is determined based on the failure detection information that any VNFM fails, a failure repairing instruction of repairing the any VNFM is sent to a preset VIM.

In the embodiment, a manner for determining based on the failure detection information that the any VNFM fails includes that:
when the failure detection information of the any VNFM is a failure state, it is determined that the any VNFM fails;
or, when the failure detection information of the any VNFM is not acquired in a set number of continuous detection cycles, it is determined that the any VNFM fails.

In the embodiment, the set number is not specifically limited, and the set number may be an optimal detection number set according to the experiences of the engineer for determining that the any VNFM fails, may also be an optimal detection number acquired according to a limited number of tests for determining that the any VNFM fails and may also be an optimal detection number acquired according to a limited number of computer simulations for determining that the any VNFM fails.

In an exemplary embodiment, the failure repairing instruction of repairing the any VNFM includes at least one of the following manners:
a first manner: a restarting instruction of restarting a set virtual machine, the any VNFM being arranged in the set virtual machine; and
a second manner: a reconstruction instruction of reconstructing the any VNFM.

In the embodiment, the any VNFM is reconstructed in, but not limited to, the following manner:
the set virtual machine is deleted, and the set virtual machine and the any VNFM are reconstructed.

According to the VNFM failure repairing method of the first embodiment of the present invention, a VNFM failure may be automatically repaired, the VNFM failure repairing speed and efficiency may be effectively improved, and the reliability of the VNFM and the running stability and maintenance stability of a VNF are effectively improved.

A second embodiment of the present invention provides a VNFM failure repairing method, which is applied to a monitor. As shown in Fig. 1, the method includes the following specific steps.

In S101, failure detection information of each VNFM is acquired according to a set detection cycle.

In the embodiment, the VNFM includes a master control VNFM and a backup VNFM.

In an exemplary embodiment, S101 includes that:
a failure detection instruction is sent to the master control VNFM and the backup VNFM according to the set detection cycle respectively; and
the failure detection information fed back by the master control VNFM and the backup VNFM based on the failure detection instruction respectively is received.

In the embodiment, the set detection cycle is not specifically limited, and the set detection cycle may be an optimal detection cycle set according to experiences of an engineer, may also be an optimal detection cycle acquired according to a limited number of tests and may also be an optimal detection cycle acquired according to a limited number of computer simulations.

In the embodiment, the failure detection information is a failure state or a normal state.

In the embodiment, the number of master control VNFMs and backup VNFMs are not specifically limited and may specifically be set according to a cloud environment.

In S102, when it is determined based on the failure detection information that any VNFM fails, a failure repairing instruction of repairing the any VNFM is sent to a preset VIM.

In the embodiment, a manner for determining based on the failure detection information that the any VNFM fails includes that:
when the failure detection information of the any VNFM is a failure state, it is determined that the any VNFM fails;
or, when the failure detection information of the any VNFM is not acquired in a set number of continuous detection cycles, it is determined that the any VNFM fails.

In the embodiment, the set number is not specifically limited, and the set number may be an optimal detection number set according to the experiences of the engineer for determining that the any VNFM fails, may also be an optimal detection number acquired according to a limited number of tests for determining that the any VNFM fails and may also be an optimal detection number acquired according to a limited number of computer simulations for determining that the any VNFM fails.

In an exemplary embodiment, S102 includes that:
when it is determined based on the failure detection information that the any VNFM fails, under the condition that the any VNFM is a master control VNFM, a switching detection instruction of detecting whether the backup VNFM is switched to a present master control VNFM or not is sent to the backup VNFM;
switching detection state information fed back by the backup VNFM based on the switching detection instruction is received; and
the failure repairing instruction of repairing the any VNFM including a restarting instruction for a first virtual machine and the master control VNFM before switching being arranged in the first virtual machine,
under the condition that the switching detection state information is that the backup VNFM has been switched to the present master control VNFM, the restarting instruction for the first virtual machine is sent to the VIM.

In an exemplary embodiment, S102 includes that:
when it is determined based on the failure detection information that the any VNFM fails, under the condition that the any VNFM is a master control VNFM, the switching detection instruction of detecting whether the backup VNFM is switched to the present master control VNFM or not is sent to the backup VNFM;
the switching detection state information fed back by the backup VNFM based on the switching detection instruction is received;
the failure repairing instruction of repairing the any VNFM including the restarting instruction for the first virtual machine and the master control VNFM before switching being arranged in the first virtual machine,
under the condition that the switching detection state information is that the backup VNFM has been switched to the present master control VNFM, the restarting instruction for the first virtual machine is sent to the VIM;
the failure repairing instruction of repairing the any VNFM further including a reconstruction instruction for the master control VNFM before switching,
when received first state information fed back by the VIM based on the restarting instruction for the first virtual machine is that a restarting operation over the first virtual machine is completed, the failure detection instruction is sent to the master control VNFM before switching;
under the condition that the received failure detection information fed back by the master control VNFM before switching based on the failure detection instruction is the failure state, the reconstruction instruction for the master control VNFM before switching is sent to the VIM;
when received second state information fed back by the VIM based on the reconstruction instruction for the master control VNFM before switching is that a reconstruction operation over the master control VNFM before switching is completed, the failure detection instruction is sent to the master control VNFM before switching; and
the failure detection information fed back by the master control VNFM before switching based on the failure detection instruction is received.

In the embodiment, the reconstruction operation is executed on the master control VNFM before switching in, but not limited to, the following manner:
the first virtual machine is deleted, and the first virtual machine and the master control VNFM before switching are reconstructed.

In an exemplary embodiment, S102 includes that:
the failure repairing instruction of repairing the any VNFM including a restarting instruction for a second virtual machine and the backup VNFM being arranged in the second virtual machine,
when it is determined based on the failure detection information that the any VNFM fails, under the condition that the any VNFM is the backup VNFM, the restarting instruction for the second virtual machine is sent to the VIM.

In an exemplary embodiment, S102 includes that:
the failure repairing instruction of repairing the any VNFM including the restarting instruction for the second virtual machine and the backup VNFM being arranged in the second virtual machine,
when it is determined based on the failure detection information that the any VNFM fails, under the condition that the any VNFM is the backup VNFM, the restarting instruction for the second virtual machine is sent to the VIM;
the failure repairing instruction of repairing the any VNFM further including a reconstruction instruction for the backup VNFM,
when received third state information fed back by the VIM based on the restarting instruction for the second virtual machine is that a restarting operation over the second virtual machine is completed, the failure detection instruction is sent to the backup VNFM;
under the condition that the received failure detection information fed back by the backup VNFM based on the failure detection instruction is the failure state, the reconstruction instruction for the backup VNFM is sent to the VIM;
when received fourth state information fed back by the VIM based on the reconstruction instruction for the backup VNFM is that a reconstruction operation over the backup VNFM is completed, the failure detection instruction is sent to the backup VNFM; and
the failure detection information fed back by the backup VNFM based on the failure detection instruction is received.

In the embodiment, the reconstruction operation is executed on the backup VNFM in, but not limited to, the following manner:
the second virtual machine is deleted, and the second virtual machine and the backup VNFM are reconstructed.

According to the VNFM failure repairing method of the second embodiment of the present invention, a VNFM failure may be automatically repaired, the VNFM failure repairing speed and efficiency may be effectively improved, and the reliability of the VNFM and the running stability and maintenance stability of a VNF are effectively improved.

A third embodiment of the present invention provides a VNFM failure repairing method, which is applied to a VIM. The method includes the following specific step.

In S301, when a failure repairing instruction of repairing any VNFM is received from a preset monitor, a failure repairing operation is executed on the any VNFM based on the failure repairing instruction.

In an exemplary embodiment, the failure repairing operation is executed on the any VNFM in at least one of the following manners:
a first manner: a restarting operation is executed on a set virtual machine, the any VNFM being arranged in the set virtual machine; and
a second manner: a reconstruction operation is executed on the any VNFM.

In the embodiment, the reconstruction operation is executed on the any VNFM in, but not limited to, the following manner:
the set virtual machine is deleted, and the set virtual machine and the any VNFM are reconstructed.

In the embodiment, the monitor may be an NFVO preset in a cloud environment and may also be an assurance system preset outside the cloud environment.

According to the VNFM failure repairing method of the third embodiment of the present invention, a VNFM failure may be automatically repaired, the VNFM failure repairing speed and efficiency may be effectively improved, and the reliability of the VNFM and the running stability and maintenance stability of a VNF are effectively improved.

A fourth embodiment of the present invention provides a VNFM failure repairing method, which is applied to a VIM. The method includes the following specific step.

In S301, when a failure repairing instruction of repairing any VNFM is received from a preset monitor, a failure repairing operation is executed on the any VNFM based on the failure repairing instruction.

In the embodiment, the VNFM includes, but not limited to, a master control VNFM and a backup VNFM.

In the embodiment, the number of master control VNFMs and backup VNFMs are not specifically limited and may specifically be set according to a cloud environment.

In the embodiment, the monitor may be an NFVO preset in a cloud environment and may also be an assurance system preset outside the cloud environment.

In an exemplary embodiment, S301 includes that:
the failure repairing instruction of repairing the any VNFM including a restarting instruction for a first virtual machine and the master control VNFM being arranged in the first virtual machine,
under the condition that the any VNFM is a master control VNFM, when the restarting instruction for the first virtual machine is received from the monitor, a restarting operation is executed on the first virtual machine; and
first state information is fed back to the monitor, the first state information being that the restarting operation over the first virtual machine is completed.

In an exemplary embodiment, S301 includes that:
the failure repairing instruction of repairing the any VNFM including the restarting instruction for the first virtual machine and the master control VNFM being arranged in the first virtual machine,
under the condition that the any VNFM is a master control VNFM, when the restarting instruction for the first virtual machine is received from the monitor, the restarting operation is executed on the first virtual machine;
the first state information is fed back to the monitor, the first state information being that the restarting operation over the first virtual machine is completed;
the failure repairing instruction of repairing the any VNFM further including a reconstruction instruction for the master control VNFM,
when the reconstruction instruction for the master control VNFM is received from the monitor, a reconstruction operation is executed on the master control VNFM; and
second state information is fed back to the monitor, the second state information being that the reconstruction operation over the master control VNFM is completed.

In the embodiment, the reconstruction operation is executed on the master control VNFM in, but not limited to, the following manner:
the first virtual machine is deleted, and the first virtual machine and the master control VNFM are reconstructed.

In an exemplary embodiment, S301 includes that:
the failure repairing instruction of repairing the any VNFM including a restarting instruction for a second virtual machine and the backup VNFM being arranged in the second virtual machine,
under the condition that the any VNFM is a backup VNFM, when the restarting instruction for the second virtual machine is received from the monitor, a restarting operation is executed on the second virtual machine; and
third state information is fed back to the monitor, the third state information being that the restarting operation over the second virtual machine is completed.

In an exemplary embodiment, S301 includes that:
the failure repairing instruction of repairing the any VNFM including the restarting instruction for the second virtual machine and the backup VNFM being arranged in the second virtual machine,
under the condition that the any VNFM is a backup VNFM, when the restarting instruction for the second virtual machine is received from the monitor, the restarting operation is executed on the second virtual machine; and
the third state information is fed back to the monitor, the third state information being that the restarting operation over the second virtual machine is completed;
the failure repairing instruction of repairing the any VNFM further including a reconstruction instruction for the backup VNFM,
when the reconstruction instruction for the backup VNFM is received from the monitor, a reconstruction operation is executed on the backup VNFM; and
fourth state information is fed back to the monitor, the fourth state information being that the reconstruction operation over the backup VNFM is completed.

In the embodiment, the reconstruction operation is executed on the backup VNFM in, but not limited to, the following manner:
the second virtual machine is deleted, and the second virtual machine and the backup VNFM are reconstructed.

According to the VNFM failure repairing method of the fourth embodiment of the present invention, a VNFM failure may be automatically repaired, the VNFM failure repairing speed and efficiency may be effectively improved, and the reliability of the VNFM and the running stability and maintenance stability of a VNF are effectively improved.

A fifth embodiment of the present invention provides a VNFM failure repairing method, which is applied to a VNFM. The method includes the following specific step.

In S501, failure detection information is sent to a preset monitor according to a set detection cycle.

In an exemplary embodiment, S501 includes that:
a failure detection instruction sent by the monitor according to the set detection cycle is received; and
the failure detection information is fed back based on the failure detection instruction.

In the embodiment, the failure detection information is a failure state or a normal state.

In the embodiment, the monitor may be an NFVO preset in a cloud environment and may also be an assurance system preset outside the cloud environment.

According to the VNFM failure repairing method of the fifth embodiment of the present invention, a VNFM failure may be automatically detected, the VNFM failure repairing speed and efficiency may be effectively improved, and the reliability of the VNFM and the running stability and maintenance stability of a VNF are effectively improved.

A sixth embodiment of the present invention provides a monitor, which, as shown in Fig. 2, includes the following parts:
a processor 601 and a memory 602. In an exemplary embodiment, the processor 601 and the memory 602 may be connected through a bus or in another manner.

The processor 601 may be a universal processor such as a Central Processing Unit (CPU), and may also be a Digital Signal Processor (DSP), an Application Specific Integrated Circuit (ASIC) or one or more integrated circuits configured to implement the embodiment of the present invention. The memory 602 is configured to store an instruction executable for the processor 601.

The memory 602 is configured to store a program code and transmit the program code to the processor 601. The memory 602 may include a volatile memory, for example, a Random Access Memory (RAM). The memory 602 may also include a non-volatile memory, for example, a Read-Only Memory (ROM), a flash memory, a Hard Disk Drive (HDD) or a Solid-State Drive (SSD). The memory 602 may also include a combination of memories of the abovementioned types.

The processor 601 is configured to call the program code stored in the memory 602 to implement part or all of the steps in any embodiment in the first embodiment of the present invention to the second embodiment of the present invention.

According to the monitor of the sixth embodiment of the present invention, a VNFM failure may be automatically acquired and judged, the VNFM failure repairing speed and efficiency may be effectively improved, and the reliability of a VNFM and the running stability and maintenance stability of a VNF are effectively improved.

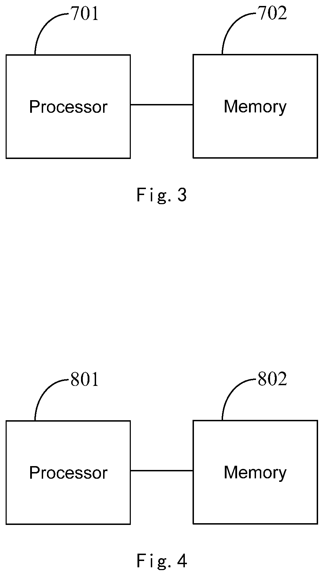

A seventh embodiment of the present invention provides a VIM, which, as shown in Fig. 3, includes the following parts:
a processor 701 and a memory 702. In an exemplary embodiment, the processor 701 and the memory 702 may be connected through a bus or in another manner.

The processor 701 may be a universal processor such as a CPU, and may also be a DSP, an ASIC or one or more integrated circuits configured to implement the embodiment of the present invention. The memory 702 is configured to store an instruction executable for the processor 701.

The memory 702 is configured to store a program code and transmit the program code to the processor 701. The memory 702 may include a volatile memory, for example, a RAM. The memory 702 may also include a non-volatile memory, for example, a ROM, a flash memory, an HDD or an SSD. The memory 702 may also include a combination of memories of the abovementioned types.

The processor 701 is configured to call the program code stored in the memory 702 to implement part or all of the steps in any embodiment in the third embodiment of the present invention to the fourth embodiment of the present invention.

According to the VIM of the seventh embodiment of the present invention, a VNFM failure may be automatically repaired, the VNFM failure repairing speed and efficiency may be effectively improved, and the reliability of a VNFM and the running stability and maintenance stability of a VNF are effectively improved.

An eighth embodiment of the present invention provides a VNFM, which, as shown in Fig. 4, includes the following parts:
a processor 801 and a memory 802. In an exemplary embodiment, the processor 801 and the memory 802 may be connected through a bus or in another manner.

The processor 801 may be a universal processor such as a CPU, and may also be a DSP, an ASIC or one or more integrated circuits configured to implement the embodiment of the present invention. The memory 802 is configured to store an instruction executable for the processor 801.

The memory 802 is configured to store a program code and transmit the program code to the processor 801. The memory 802 may include a volatile memory, for example, a RAM. The memory 802 may also include a non-volatile memory, for example, a ROM, a flash memory, an HDD or an SSD. The memory 802 may also include a combination of memories of the abovementioned types.

The processor 801 is configured to call the program code stored in the memory 802 to implement part or all of the steps in the fifth embodiment of the present invention.

The VNFM includes, but not limited to, a master control VNFM and a backup VNFM.

According to the VNFM of the eighth embodiment of the present invention, a VNFM failure may be automatically detected, the VNFM failure repairing speed and efficiency may be effectively improved, and the reliability of the VNFM and the running stability and maintenance stability of a VNF are effectively improved.

A ninth embodiment of the present invention provides a computer-readable storage medium.

The computer storage medium may be a RAM, a flash memory, a ROM, an Erasable Programmable ROM (EPROM), an Electrically EPROM (EEPROM), a register, an HDD, a mobile HDD, a Compact Disc Read-Only Memory (CD-ROM) or a storage medium in any other known form in this field.

The computer-readable storage medium stores one or more programs, and the one or more programs may be executed by one or more processors to implement part or all of the steps in any embodiment from the first embodiment of the present invention to the fifth embodiment of the present invention.

The computer-readable storage medium of the ninth embodiment of the present invention stores the one or more programs, the one or more programs may be executed by the one or more processors, so that a VNFM failure may be automatically repaired, the VNFM failure repairing speed and efficiency may be effectively improved, and the reliability of a VNFM and the running stability and maintenance stability of a VNF are effectively improved.

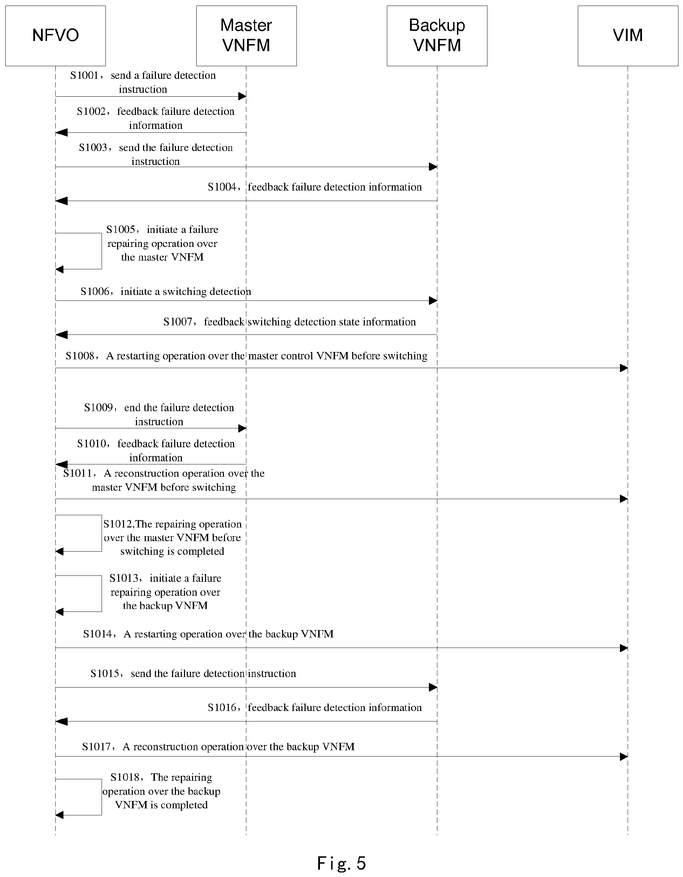

In a tenth embodiment of the present invention, an application example of the present invention is introduced with a VNFM failure repairing method as an example based on the abovementioned embodiments in combination with Fig. 5.

In S1001, a preset NFVO sends a failure detection instruction to a master control VNFM according to a set detection cycle.

In S1002, the master control VNFM, when receiving the failure detection instruction, feeds back failure detection information of the master control VNFM to the NFVO.

In S1003, the NFVO sends the failure detection instruction to a backup VNFM according to the set detection cycle.

In S1004, the backup VNFM, when receiving the failure detection instruction, feeds back failure detection information of the backup VNFM to the NFVO.

In S1005, under the condition that the failure detection information of the master control VNFM is a failure state, the NFVO initiates a failure repairing operation over the master control VNFM.

In S1006, the NFVO initiates switching detection to the backup VNFM to detect whether the backup VNFM completes switching with the master control VNFM and is switched to a present master control VNFM or not.

In S1007, the backup VNFM feeds back switching detection state information to the NFVO, the switching detection state information being that the backup VNFM has been switched to the present master control VNFM.

In S1008, the NFVO sends a restarting operation instruction for a first virtual machine to a preset VIM, the master control VNFM before switching being arranged in the first virtual machine, and
the VIM executes a restarting operation over the first virtual machine.

In S1009, the NFVO sends the failure detection instruction to the master control VNFM before switching.

In S1010, the master control VNFM before switching, when receiving the failure detection instruction, feeds back failure detection information.

In S1011, under the condition that the failure detection information fed back by the master control VNFM before switching is the failure state, the NFVO sends a reconstruction operation instruction for the master control VNFM before switching to the VIM, and
the VIM executes a reconstruction operation on the master control VNFM before switching.

In S1012, a repairing operation over the master control VNFM before switching is completed.

In S1013, under the condition that the failure detection information of the backup VNFM is the failure state, the NFVO initiates a failure repairing operation over the backup VNFM.

In S1014, the NFVO sends a restarting operation instruction for a second virtual machine to the preset VIM, the backup VNFM being arranged in the second virtual machine, and
the VIM executes a restarting operation over the second virtual machine.

In S1015, the NFVO sends the failure detection instruction to the backup VNFM.

In S1016, the backup VNFM, when receiving the failure detection instruction, feeds back failure detection information.

In S1017, under the condition that the failure detection information fed back by the backup VNFM is the failure state, the NFVO sends a reconstruction operation instruction for the backup VNFM to the VIM, and
the VIM executes a reconstruction operation on the backup VNFM.

In S1018, the repairing operation over the backup VNFM is completed.

According to the VNFM failure repairing method of the tenth embodiment of the present invention, a VNFM failure may be automatically repaired, the VNFM failure repairing speed and efficiency may be effectively improved, and the reliability of the VNFM and the running stability and maintenance stability of a VNF are effectively improved.

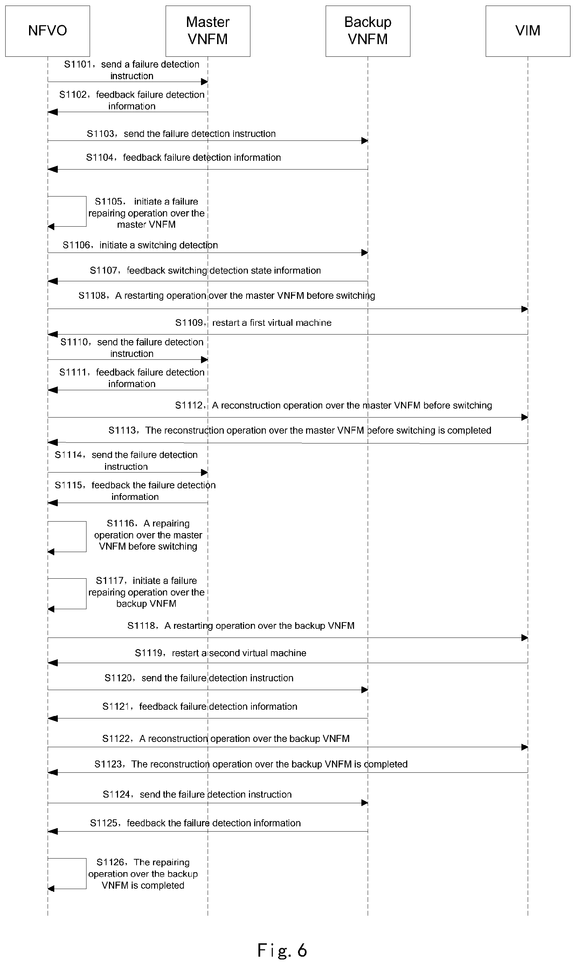

In an eleventh embodiment of the present invention, an application example of the present invention is introduced with a VNFM failure repairing method as an example based on the abovementioned embodiments in combination with Fig. 6.

In S1101, a preset NFVO sends a failure detection instruction to a master control VNFM according to a set detection cycle.

In S1102, the master control VNFM, when receiving the failure detection instruction, feeds back failure detection information of the master control VNFM to the NFVO.

In S1103, the NFVO sends the failure detection instruction to a backup VNFM according to the set detection cycle.

In S1104, the backup VNFM, when receiving the failure detection instruction, feeds back failure detection information of the backup VNFM to the NFVO.

In S1105, under the condition that the failure detection information fed back by the master control VNFM is a failure state, the NFVO initiates a failure repairing operation over the master control VNFM.

In S1106, the NFVO initiates switching detection to the backup VNFM to detect whether the backup VNFM completes switching with the master control VNFM and is switched to a present master control VNFM or not.

In S1107, the backup VNFM feeds back switching detection state information to the master control VNFM, the switching detection state information being that the backup VNFM has been switched to the present master control VNFM.

In S1108, the NFVO sends a restarting operation instruction for a first virtual machine to a preset VIM, the master control VNFM before switching being arranged in the first virtual machine, and
the VIM executes a restarting operation over the first virtual machine.

In S1109, the VIM feeds back first state information to the NFVO, the first state information being that the first virtual machine is restarted.

In S1110, the NFVO sends the failure detection instruction to the master control VNFM before switching.

In S1111, the master control VNFM before switching, when receiving the failure detection instruction, feeds back failure detection information.

In S1112, under the condition that the failure detection information fed back by the master control VNFM before switching is the failure state, the NFVO sends a reconstruction operation instruction for the master control VNFM before switching to the VIM, and
the VIM executes a reconstruction operation on the master control VNFM before switching.

In S1113, the VIM feeds back second state information to the NFVO, the second state information being that the reconstruction operation over the master control VNFM before switching is completed.

In S1114, the NFVO sends the failure detection instruction to the master control VNFM before switching.

In S1115, the master control VNFM before switching, when receiving the failure detection instruction, feeds back the failure detection information.

In S1116, a repairing operation over the master control VNFM before switching is completed.

In S1117, under the condition that the failure detection information fed back by the backup VNFM is the failure state, the NFVO initiates a failure repairing operation over the backup VNFM.

In S1118, the NFVO sends a restarting operation instruction containing identification information of a second virtual machine to the preset VIM, the backup VNFM being arranged in the second virtual machine, and
the VIM executes a restarting operation over the second virtual machine.

In S1119, the VIM feeds back third state information to the NFVO, the third state information being that the second virtual machine is restarted.

In S1120, the NFVO sends the failure detection instruction to the backup VNFM.

In S1121, the backup VNFM, when receiving the failure detection instruction, feeds back failure detection information.

In S1122, under the condition that the failure detection information fed back by the backup VNFM is the failure state, the NFVO sends a reconstruction operation instruction for the backup VNFM to the VIM, and
the VIM executes a reconstruction operation on the backup VNFM.

In S1123, the VIM feeds back fourth state information to the NFVO, the fourth state information being that the backup VNFM is reconstructed.

In S1124, the NFVO sends the failure detection instruction to the backup VNFM.

In S1125, the backup VNFM, when receiving the failure detection instruction, feeds back the failure detection information.

In S1126, the repairing operation over the backup VNFM is completed.

According to the VNFM failure repairing method of the eleventh embodiment of the present invention, a VNFM failure may be automatically repaired, the VNFM failure repairing speed and efficiency may be effectively improved, and the reliability of the VNFM and the running stability and maintenance stability of a VNF are effectively improved.

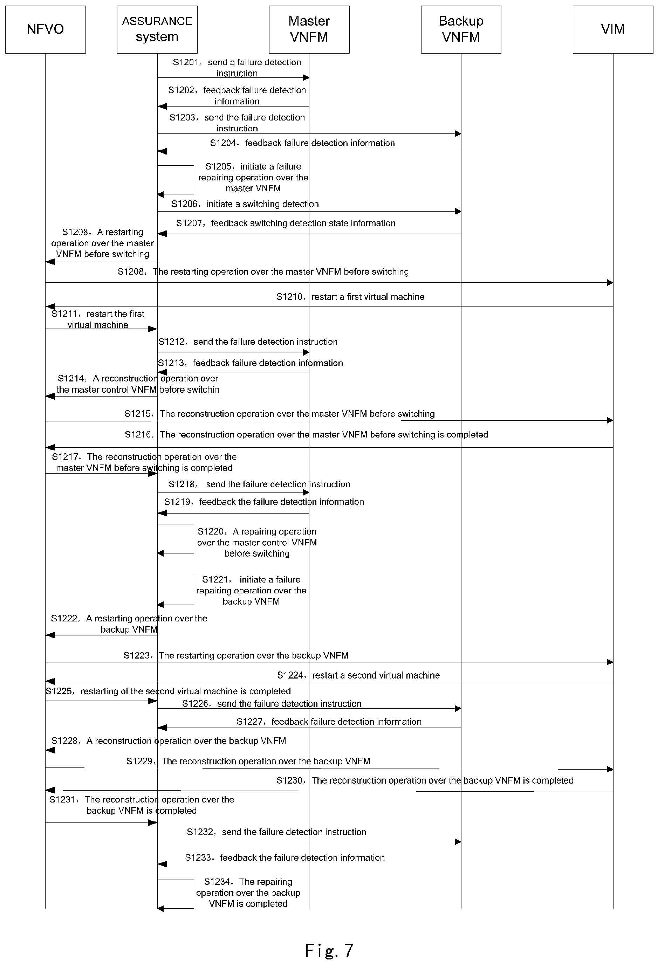

In a twelfth embodiment of the present invention, an application example of the present invention is introduced with a VNFM failure repairing method as an example based on the abovementioned embodiments in combination with Fig. 7.

In S1201, a preset assurance system sends a failure detection instruction to a master control VNFM according to a set detection cycle.

In S1202, the master control VNFM, when receiving the failure detection instruction, feeds back failure detection information of the master control VNFM to the assurance system.

In S1203, the assurance system sends the failure detection instruction to a backup VNFM according to the set detection cycle.

In S1204, the backup VNFM, when receiving the failure detection instruction, feeds back failure detection information of the backup VNFM to the assurance system.

In S1205, under the condition that the failure detection information fed back by the master control VNFM is a failure state, the assurance system initiates a failure repairing operation over the master control VNFM.

In S1206, the assurance system initiates switching detection to the backup VNFM to detect whether the backup VNFM completes switching with the master control VNFM and is switched to a present master control VNFM or not.

In S1207, the backup VNFM feeds back switching detection state information to the master control VNFM, the switching detection state information being that the backup VNFM has been switched to the present master control VNFM.

In S1208, the assurance system sends a restarting operation instruction for a first virtual machine to a preset NFVO, the master control VNFM before switching being arranged in the first virtual machine, and

In S1209, the NFVO sends the restarting operation instruction for the first virtual machine to a VIM, and
the VIM executes a restarting operation over the first virtual machine.

In S1210, the VIM feeds back first state information to the NFVO, the first state information being that the first virtual machine is restarted.

In S1211, the NFVO sends first state information to the assurance system, the first state information being that the first virtual machine is restarted.

In S1212, the assurance system sends the failure detection instruction to the master control VNFM before switching.

In S1213, the master control VNFM before switching, when receiving the failure detection instruction, feeds back failure detection information.

In S1214, under the condition that the failure detection information fed back by the master control VNFM before switching is the failure state, the assurance system sends a reconstruction operation instruction for the master control VNFM before switching to the NFVO.

In S1215, the NFVO sends the reconstruction operation instruction for the master control VNFM before switching to the VIM, and
the VIM executes a reconstruction operation on the master control VNFM before switching.

In S1216, the VIM feeds back second state information to the NFVO, the second state information being that the reconstruction operation over the master control VNFM before switching is completed.

In S1217, the NFVO sends the second state information to the assurance system, the second state information being that the reconstruction operation over the master control VNFM before switching is completed.

In S1218, the assurance system sends the failure detection instruction to the master control VNFM before switching.

In S1219, the master control VNFM before switching, when receiving the failure detection instruction, feeds back the failure detection information.

In S1220, a repairing operation over the master control VNFM before switching is completed.

In S1221, under the condition that the failure detection information of the backup VNFM is the failure state, the assurance system initiates a failure repairing operation over the backup VNFM.

In S1222, the assurance system sends a restarting operation instruction for a second virtual machine to the NFVO, the backup VNFM being arranged in the second virtual machine, and

In S1223, the NFVO sends the restarting operation instruction for the second virtual machine to the VIM, and
the VIM executes a restarting operation over the second virtual machine.

In S1224, the VIM feeds back third state information to the NFVO, the third state information being that the second virtual machine is restarted.

In S1225, the NFVO sends the third state information to the assurance system, the third state information being that the second virtual machine is restarted.

In S1226, the assurance system sends the failure detection instruction to the backup VNFM.

In S1227, the backup VNFM, when receiving the failure detection instruction, feeds back the failure detection information.

In S1228, under the condition that the failure detection information fed back by the backup VNFM is the failure state, the assurance system sends a reconstruction operation instruction for the backup VNFM to the NFVO.

In S1229, the NFVO sends the reconstruction operation instruction for the backup VNFM to the VIM, and
the VIM executes a reconstruction operation on the backup VNFM.

In S1230, the VIM feeds back fourth state information to the NFVO, the fourth state information being that the backup VNFM is reconstructed.

In S1231, the NFVO sends the fourth state information to the assurance system, the fourth state information being that the reconstruction operation over the backup VNFM is completed.

In S1232, the assurance system sends the failure detection instruction to the backup VNFM.

In S1233, the backup VNFM, when receiving the failure detection instruction, feeds back the failure detection information.

In S1234, the repairing operation over the backup VNFM is completed.

According to the VNFM failure repairing method of the twelfth embodiment of the present invention, a VNFM failure may be automatically repaired, the VNFM failure repairing speed and efficiency may be effectively improved, and the reliability of the VNFM and the running stability and maintenance stability of a VNF are effectively improved.

It is to be noted that, in the present invention, terms "include" and "contain" or any other transformations thereof are intended to cover nonexclusive inclusions such that a process, method, object or device including a series of elements not only includes those elements but also includes other elements that are not clearly listed or further includes elements intrinsic to the process, the method, the object or the device. Under the condition of no more limitations, an element limited by a statement "including a/an......" does not exclude existence of another identical element in a process, method, object or device including the element.

The sequence numbers of the embodiments of the present invention are only adopted for description and do not represent superiority-inferiority of the embodiments.

Through the above descriptions about the implementation modes, those skilled in the art may clearly know that the methods of the embodiments may be implemented in a manner of combining software and a required universal hardware platform and, of course, may also be implemented through hardware, but the former is a preferred implementation mode under many circumstances. Based on such an understanding, the technical solutions of the present invention substantially or parts making contributions to a conventional art may be embodied in form of a software product. The computer software product is stored in a storage medium (for example, a Read-Only Memory (ROM)/Random Access Memory (RAM), a magnetic disk and an optical disk), including a plurality of instructions configured to enable a terminal (which may be a mobile phone, a computer, a server, an air conditioner, a network device or the like) to execute the method of each embodiment of the present invention.

The embodiments of the present invention are described above in combination with the drawings. However, the present invention is not limited to the specific implementation modes, and the specific implementation modes are only schematic and nonrestrictive. Under the inspiration of the present invention, those of ordinary skill in the art may also make many forms without departing from the objective of the present invention and the scope of protection of the claims, and all these forms fall within the scope of protection of the present invention.

## Claims

1. A method for repairing Virtualized Network Function Manager (VNFM) failure, comprising:
acquiring failure detection information of each VNFM according to a set detection cycle; and
when it is determined based on the failure detection information that any VNFM fails, sending a failure repairing instruction of repairing the any VNFM to a preset Virtualized Infrastructure Manager (VIM).

2. The method as claimed in claim 1, wherein determining based on the failure detection information that the any VNFM fails comprises:
when the failure detection information of the any VNFM is a failure state, determining that the any VNFM fails;
or, when the failure detection information of the any VNFM is not acquired in a set number of continuous detection cycles, determining that the any VNFM fails.

3. The method as claimed in claim 1 or 2, wherein the VNFM comprises a master control VNFM and a backup VNFM; and
acquiring the failure detection information of each VNFM according to the set detection cycle comprises:
sending a failure detection instruction to the master control VNFM and the backup VNFM according to the set detection cycle respectively, and
receiving the failure detection information fed back by the master control VNFM and the backup VNFM based on the failure detection instruction respectively.

4. The method as claimed in claim 3, wherein the any VNFM is the master control VNFM; and
before sending the failure repairing instruction of repairing the any VNFM to the preset VIM, the method further comprises:
sending a switching detection instruction of detecting whether the backup VNFM is switched to a present master control VNFM or not is sent to the backup VNFM, and
receiving switching detection state information fed back by the backup VNFM based on the switching detection instruction.

5. The method as claimed in claim 4, wherein the failure repairing instruction of repairing the any VNFM comprises a restarting instruction for a first virtual machine, the master control VNFM before switching being arranged in the first virtual machine; and
sending the failure repairing instruction of repairing the any VNFM to the preset VIM comprises:
under the condition that the switching detection state information is that the backup VNFM has been switched to the present master control VNFM, sending the restarting instruction for the first virtual machine to the VIM.

6. The method as claimed in claim 5, wherein the failure repairing instruction of repairing the any VNFM further comprises a reconstruction instruction for the master control VNFM before switching; and
sending the failure repairing instruction of repairing the any VNFM to the preset VIM further comprises:
when received first state information fed back by the VIM based on the restarting instruction for the first virtual machine is that a restarting operation over the first virtual machine is completed, sending the failure detection instruction to the master control VNFM before switching, and
under the condition that the received failure detection information fed back by the master control VNFM before switching based on the failure detection instruction is the failure state, sending the reconstruction instruction for the master control VNFM before switching to the VIM.

7. The method as claimed in claim 6, after sending the reconstruction instruction for the master control VNFM before switching to the VIM, further comprising:
when received second state information fed back by the VIM based on the reconstruction instruction for the master control VNFM before switching is that a reconstruction operation over the master control VNFM before switching is completed, sending the failure detection instruction to the master control VNFM before switching; and
receiving the failure detection information fed back by the master control VNFM before switching based on the failure detection instruction.

8. The method as claimed in claim 3, wherein the any VNFM is the backup VNFM, and the failure repairing instruction of repairing the any VNFM comprises a restarting instruction for a second virtual machine, the backup VNFM being arranged in the second virtual machine; and
sending the failure repairing instruction of repairing the any VNFM to the preset VIM comprises:
sending the restarting instruction for the second virtual machine to the VIM.

9. The method as claimed in claim 8, wherein the failure repairing instruction of repairing the any VNFM further comprises a reconstruction instruction for the backup VNFM; and
sending the failure repairing instruction of repairing the any VNFM to the preset VIM further comprises:
when received third state information fed back by the VIM based on the restarting instruction for the second virtual machine is that a restarting operation over the second virtual machine is completed, sending the failure detection instruction to the backup VNFM, and
under the condition that the received failure detection information fed back by the backup VNFM based on the failure detection instruction is the failure state, sending the reconstruction instruction for the backup VNFM to the VIM.

10. The method as claimed in claim 9, after sending the reconstruction instruction for the backup VNFM to the VIM, further comprising:
when received fourth state information fed back by the VIM based on the reconstruction instruction for the backup VNFM is that a reconstruction operation over the backup VNFM is completed, sending the failure detection instruction to the backup VNFM; and
receiving the failure detection information fed back by the backup VNFM based on the failure detection instruction.

11. A method for repairing Virtualized Network Function Manager (VNFM) failure, comprising
when a failure repairing instruction of repairing any VNFM is received from a preset monitor, executing a failure repairing operation on the any VNFM based on the failure repairing instruction.

12. The method as claimed in claim 11, wherein the any VNFM is a master control VNFM, and the failure repairing instruction of repairing the any VNFM comprises a restarting instruction for a first virtual machine, the master control VNFM being arranged in the first virtual machine; and
executing the failure repairing operation on the any VNFM based on the failure repairing instruction when the failure repairing instruction of repairing the any VNFM is received from the preset monitor comprises
when the restarting instruction for the first virtual machine is received from the monitor, executing a restarting operation on the first virtual machine.

13. The method as claimed in claim 12, after executing the restarting operation on the first virtual machine, further comprising:
feeding back first state information to the monitor,
the first state information being that the restarting operation over the first virtual machine is completed.

14. The method as claimed in claim 12, wherein the failure repairing instruction of repairing the any VNFM further comprises a reconstruction instruction for the master control VNFM; and
executing the failure repairing operation on the any VNFM based on the failure repairing instruction when the failure repairing instruction of repairing the any VNFM is received from the preset monitor further comprises
when the reconstruction instruction for the master control VNFM is received from the monitor, executing a reconstruction operation on the master control VNFM.

15. The method as claimed in claim 14, after executing the reconstruction operation on the master control VNFM, further comprising:
feeding back second state information to the monitor
the second state information being that the reconstruction operation over the master control VNFM is completed.

16. The method as claimed in claim 11, wherein the any VNFM is a backup VNFM, and the failure repairing instruction of repairing the any VNFM comprises a restarting instruction for a second virtual machine, the backup VNFM being arranged in the second virtual machine; an
executing the failure repairing operation on the any VNFM based on the failure repairing instruction when the failure repairing instruction of repairing the any VNFM is received from the preset monitor comprises:
when the restarting instruction for the second virtual machine is received from the monitor, executing a restarting operation on the second virtual machine.

17. The method as claimed in claim 16, after executing the restarting operation on the second virtual machine, further comprising
feeding back third state information to the monitor,
the third state information being that the restarting operation over the second virtual machine is completed.

18. The method as claimed in claim 16, wherein the failure repairing instruction of repairing the any VNFM further comprises a reconstruction instruction for the backup VNFM; and
executing the failure repairing operation on the any VNFM based on the failure repairing instruction when the failure repairing instruction of repairing the any VNFM is received from the preset monitor further comprises:
when the reconstruction instruction for the backup VNFM is received from the monitor, executing a reconstruction operation on the backup VNFM.

19. The method as claimed in claim 18, after executing the reconstruction operation on the backup VNFM, further comprising:
feeding back fourth state information to the monitor,
the fourth state information being that the reconstruction operation over the backup VNFM is completed.

20. A method for repairing Virtualized Network Function Manager (VNFM) failure, comprising
sending failure detection information to a preset monitor according to a set detection cycle.

21. A monitor, comprising a processor and a memory
the processor being configured to execute a Virtualized Network Function Manager (VNFM) failure repairing program stored in the memory to implement the steps of the VNFM failure repairing method as claimed in any one of claims 1-10.

22. A Virtualized Infrastructure Manager (VIM), comprising a processor and a memory
the processor being configured to execute a Virtualized Network Function Manager (VNFM) failure repairing program stored in the memory to implement the steps of the VNFM failure repairing method as claimed in any one of claims 11-19.

23. A Virtualized Network Function Manager (VNFM), comprising a processor and a memory,
the processor being configured to execute a Virtualized Network Function Manager (VNFM) failure repairing program stored in the memory to implement the step of the VNFM failure repairing method as claimed in claim 20.

24. A computer-readable storage medium, storing one or more programs, the one or more programs being executed by one or more processors to implement the steps of the Virtualized Network Function Manager (VNFM) failure repairing method as claimed in any one of claims 1-10,
or implement the steps of the VNFM failure repairing method as claimed in any one of claims 11-19
or implement the step of the VNFM failure repairing method as claimed in claim 20.
